# EUROPÄISCHE PATENTSCHRIFT

(11) **EP 1 754 942 B1**
(45) Veröffentlichungstag und Bekanntmachung des Hinweises auf die Patenterteilung: **04.05.2011**
(21) Anmeldenummer: 06002605.1
(22) Anmeldetag: 09.02.2006
(51) Int. Cl.: F24J 2/16, F24J 2/54, F24J 2/38

(54) **Fresnel-Solar-Kollektor-Anordnung**
Fresnel solar collector arrangement
Arrangement de collecteur solaire Fresnel

(30) Priorität: 20.08.2005 DE 102005039404
(43) Veröffentlichungstag der Anmeldung: 21.02.2007
(73) Patentinhaber: NOVATEC BioSol AG, 76133 Karlsruhe (DE)
(72) Erfinder: Selig, Martin, Dipl.-Ing., 76137 Karlsruhe (DE); Gottlieb, Johannes, Dr., 76227 Karlsruhe (DE); Mertins, Max, Dipl.-Ing., 79106 Freiburg (DE)
(74) Vertreter: Geitz Truckenmüller Lucht

(56) Entgegenhaltungen:
- US-A- 3 861 379
- US-A- 4 159 710
- US-A- 5 542 409
- PATENT ABSTRACTS OF JAPAN Bd. 2003, Nr. 11, 5. November 2003 (2003-11-05) & JP 2003 194419 A (KINOSHITA MIKIO), 9. Juli 2003 (2003-07-09)

## Beschreibung

Die Erfindung betrifft eine Fresnel-Solar-Kollektor-Anordnung gemäß Oberbegriff von Anspruch 1, wie sie auch das Dokument JP 2003 194419 A zeigt.

Hierunter versteht man ein linienfokussierendes System, bei dem mehrere, parallel zu einem Receiver angeordnete Spiegelstreifen der Sonnenposition nachgeführt werden und die Solar-Strahlung auf ein feststehendes Absorberrohr gelenkt wird, in dem ein wärmespeicherndes Medium strömt. Zusätzlich lenkt ein Sekundarreflektor, der dem Absorberrohr zugeordnet ist, die Strahlung auf die im Wesentlichen von dem Absorberrohr gebildete Brennlinie. Das Absorberrohr und der Sekundärreflektor bilden den erhöht über den Spiegelstreifen angeordneten Receiver. Ein derartiger Fresnel-Solar-Kollektor ist derzeit beispielsweise in Australien im Feldversuch im Betrieb. Die erzeugte Wärme kann als Prozesswärme genutzt werden oder z. B. mittels eines Stirlingmotors in Strom umgesetzt werden.

Der Vorteil der Fresnel-Solar-Kollektoren gegenüber den üblichen Parabolrinnen-Kollektoren liegt in ihrem deutlich vereinfachten Aufbau. Parabolrinnen-Kollektoren bestehen aus einem Reflektor, welcher die Form eines parabolischen Zylinders hat. Das Licht wird auch hier auf eine Linie fokussiert, die Fokallinie. In dieser Linie befindet sich das Absorberrohr des Parabolrinnen-Kollektors, welches die konzentrierte Strahlung absorbiert und an das durchströmende Medium abgibt. Das Medium wird dabei typischerweise auf Werte von ca. 400°C erwärmt. Zur Verbesserung des Wirkungsgrades kann der Absorber mit einem Glasrohr umgegeben sein. Im Zwischenraum zwischen Absorber- und Glasrohr herrscht dabei ein Vakuum zur Isolation. Der so erzeugte "Solardampf" kann auch direkt zu Prozesswärmeanwendungen oder für konventionelle Dampf- und Kombikraftwerke benutzt werden.

Alternativ sind Flachkollektoren und CPC-Kollektoren als weitere Kollektortypen bekannt.

Der Wirkungsgrad des Fresnel-Solar-Kollektors hängt dabei im Wesentlichen davon ab, wie gut die reflektierte Sonnenstrahlung auf das Absorberrohr fokussiert wird. Hierzu ist es sinnvoll, die dem Absorberrohr zugeordneten Primärspiegel der Sonne nachzuführen. Nur so können akzeptable Wirkungsgrade der Anlage erreicht werden. Dies geschieht üblicherweise mittels eines einem jedem Primärspiegel zugeordneten Elektromotors. Die Elektromotoren sind üblicherweise wiederum mit einer Zeitsteuerung versehen, so dass die Nachführung also eher eine Steuerung als eine Regelung darstellt.

Ein wesentlichen Problem der Fresnel-Solar-Kollektoren besteht darin, dass derartige Anordnungen die besten Wirkungsgrade in Bereichen höchster Sonneneinstrahlung, also etwa in Wüstenbereichen, erzielen, in denen extreme Temperaturschwankungen von Minusgraden bis Plusgraden von weit über 40°C zumindest nicht ungewöhnlich sind. Die eingesetzten Materialien und Trägerstrukturen sind dabei erheblichen Beanspruchungen ausgesetzt, wobei thermische Verformungen des Materials nahezu unvermeidlich sind und daher zu Winkelabweichungen in der Gesamtanordnung führen können, die sich beim Wirkungsgrad der Gesamtanlage im zweistelligen Prozentbereich niederschlagen können. Eine bereits geringe Winkelabweichung bei der Trägerstruktur der Spiegelanordnung kann dazu führen, dass ein Großteil der von den Primärspiegeln reflektierten Strahlung nicht auf das Absorberrohr fokussiert wird, sondern schlicht an dem Absorberrohr vorbeireflektiert wird. Darüber hinaus ist die Individualsteuerung bzw. auch -regelung und - abstimmung der diversen Elektromotoren zur Nachführung bzw. Steuerung der Verschwenkung der Spiegel von einem erheblichen Regelungs- bzw. Steuerungsaufwand begleitet, der die Anlage einigermaßen störanfällig werden lässt.

Ausgehend von diesem Stand der Technik liegt der Erfindung die Aufgabe zugrunde, die Anlage insgesamt robuster zu gestalten und dabei ihren Wirkungsgrad nach Möglichkeit zu verbessern.

Die Lösung dieser Aufgabe gelingt durch eine Fresnel-Solar-Kollektor-Anordnung gemäß Hauptanspruch. Vorteilhafte Ausgestaltungen können den abhängigen Ansprüchen 2 bis 11 entnommen werden.

Dadurch, dass gemäß Hauptanspruch das Spiegeltragwerk im Bereich des Receivertragwerks und/oder in Verbindung mit dem Receivertragwerk ortsfest gelagert ist und im Übrigen gleitend, mithin zwängungsfrei gelagert ist, ist sichergestellt, dass das Spiegeltragwerk im Falle von der aufgrund der Hitzeeinwirkungen unvermeidlichen thermischen Ausdehnung des Tragwerks die entsprechenden Veränderungen ausgleicht.

Dies gelingt noch besser, wenn das Receivertragwerk und das Spiegeltragwerk im Wesentlichen aus dem gleichen Material gefertigt sind und im Wesentlichen an der gleichen Stelle ortsfest aufgelagert sind. Im Falle von thermischen Materialdehnungen oder Schwindungen kann zumindest annäherungsweise davon ausgegangen werden, dass die wechselseitigen Ausdehnungen der Tragwerke im gleichen Ausmaß erfolgen. Beispielsweise wird dann infolge der Hitzeeinwirkung der Receivermast annähernd genauso gedehnt, wie etwa die als Spiegeltragwerk angeordneten Tragschienen der Primärspiegel. Aufgrund der zumindest im Wesentlichen einander orthogonalen Anordnung von Receivertragwerk und Spiegeltragwerk zueinander und dem aus dem gleichen eingesetzten Material resultierenden gleichen Ausdehnungskoeffizienten ist wiederum sichergestellt, dass sich die Winkelverhältnisse untereinander nicht oder allenfalls gering ändern. Dies ist jedoch nur möglich, wenn sowohl das Receivertragwerk, wie auch das Spiegeltragwerk zwängungsfrei gelagert ist, also nur eines von mindestens zwei notwendigen Auflagern ortsfest ist. Diese verblüffend einfache Lösung erspart es Materialdehnungen oder - schwindungen kompliziert nachzuregeln oder aber den weitgehend aussichtslosen Versuch zu unternehmen, Materialen einzusetzen, die mehr oder weniger temperaturunabhängig sind. Der Einsatz derartiger Materialien scheidet zumeist aus schon aus Kostengründen aus.

In konkreter Ausgestaltung kann der Receiver der Fresnel-Solar-Kollektor-Anordnung als Absorberrohr auf eine Reihe von Receivermasten aufgelagert sein, wobei an selber Stelle gegebenenfalls unter Verwendung des selben Betonsockels auch das Spiegeltragwerk ortsfest gelagert sein kann. Receivermast und Spiegeltragwerk sind dabei mit Vorteil jeweils aus Stahl 37 gefertigt und weisen somit weitgehend den gleichen Ausdehnungskoeffizienten auf.

In vorteilhafter Weiterbildung sind einige der auf dem Spiegeltragwerk aufgelagerten Primärspiegel zu eine Primärspiegelgruppe zusammengefasst, die wiederum mittels eines gemeinsamen, mechanischen Stellgliedes zur Nachführung mechanisch gekoppelt sind und so der Sonne nachgeführt sind. Aufgrund der Verwendung eines gemeinsamen Stellgliedes entfällt die umständliche Abstimmung, komplizierte Steuerung und Regelung der eingesetzten Elektromotorik untereinander zumindest innerhalb der betroffenen Primärspiegelgruppe. Vielmehr kann mittels eines gemeinsamen Stellgliedes die Primärspiegelgruppe insgesamt verstellt werden, wobei die Relativwinkelbeziehung der Primärspiegel untereinander stets gewahrt ist. Dem liegt wiederum die an sich triviale Erkenntnis des Strahlensatzes zugrunde, dass die im Zuge der Nachführung nach der Sonne erforderliche relative Winkelverstellung der Primärspiegel, die gegenüber dem beabstandet und erhöht angeordneten Absorberrohr in einer gedachten orthogonalen Linie zum Absorberrohr hintereinander angeordnet sind, relativ zueinander gleich ist. Dies würde übrigens auch für die auf einer gedachten parallelen Linie zu dem Absorberrohr angeordneten Primärspiegel gelten.

Die vorstehende erläuterten Ausführung der Kollektoranordnung mit einer mechanischen Kopplung zur gemeinsamen Verschwenkung der Primärspiegel mittels eines gemeinsamen Stellgliedes ist dabei auch unabhängig von der zwängungsfreien Lagerung des Spiegeltragwerks vorteilhaft.

Diese gemeinsame Verschwenkung wird durch eine Verbindung der Primärspiegel einer Primärspiegelgruppe mittels einer Nachführwelle erreicht. Durch die Bewegung der Schubstange bei der Ausrichtung der Primärspiegel wird eine Drehung der Nachführwelle bewirkt, welche durch die Verbindung gleichmäßig auf die gesamte Primärspiegelgruppe übertragen wird.

Mit Vorteil ist die Nachführwelle in regelmäßigen Abständen in Rollenböcken gelagert, welche die Welle umgreifen, sie dabei aber lediglich mithilfe von Rollelementen lagern. Diese Rollelemente gestatten eine axiale Drehung der Nachführwelle und sind in ihrer Form fassartig gebildet, sind also im Wesentlichen zylindrig, wobei ihre Mantelflächen bauchig ausladend sind. Diese Form ermöglicht es, die Nachführwelle nicht nur entlang ebener Flächen anzuordnen, sondern auch gegebenenfalls über Höhenänderungen hinweg zu führen. Die Welle kann auf den Rollelementen schräg angstellt werden, so dass eine gleichzeitige schräge Anstellung des Rollenbocks entfallen kann.

In konkreter Ausgestaltung kann die mechanische Kopplung der zu einer Gruppe zusammengefassten Primärspiegel mittels einer gemeinsamen Schubstange realisiert sein, über die die verschwenkbar auf der Spiegeltragwerk gelagerten Primärspiegel relativ zum Absorberrohr in Abhängigkeit von Stand der Sonne bzw. der Uhrzeit verschwenkt oder besser gesagt der Sonne nachgeführt werden.

In vorteilhafter Ausgestaltung ist die Schubstange mit einem Linearmotor elektromotorisch angetrieben, wobei mittels des Linearmotors die orthogonal zur Längserstreckung des Absorberrohrs angeordnete Schubstange in Abhängigkeit vom Sonnenstand ein- oder ausgerückt wird.

In vorteilhafter Ausgestaltung strömt dabei in dem Absorberrohr ein Wasserdampf oder ein Thermoöl, das durch die reflektierte Strahlung auf eine Temperatur von bis zu ca. 400°C erhitzt wird. Das solcherart erhitzte Wärmemedium kann dann in an sich bekannter Weise weiterer Nutzung zugeführt werden oder zur Stromerzeugung eingesetzt werden.

Um trotz der verbesserten Winkeltreue der Anordnung auch den Wirkungsgrad der Anordnung weiterzuverbessern, ist dem Absorberrohr zusätzlich ein Sekundärreflektor zugeordnet, der das Absorberrohr im Wesentlichen schirmartig übergreift und so etwaige Streustrahlung der Primärspiegel auffängt und derart umlenkt, dass auch diese Streustrahlung auf das Absorberrohr fokussiert wird.

Der Sekundärreflektor ist also ebenfalls so angeordnet, dass das Absorberrohr im Wesentlichen in der Fokallinie des Sekundärreflektors liegt.

In einer weiteren Ausgestaltung des elektromotorischen Antriebs ist der Linearmotor im Wesentlichen auch zentral, also etwa im Bereich der gedachten Linie, die von den in einer Reihe angeordneten Receivermasten gebildet ist, angeordnet. Dabei kann bei Verwendung einer entsprechenden Umlenkung mit ein und dem selben Linearmotor sowohl eine oder mehrere mittels einer oder mehrerer Schubstangen angetriebene Primärspiegelgruppen links des Absorberrohrs, wie auch eine oder mehrere mittels einer oder mehrer Schubstangen angetriebene Primärspiegelgruppen rechts des Absorberrohrs derart angetrieben werden, dass eine zeitgesteuerte oder dem Sonnenstand nachgeführte geregelte Verschwenkung der Primärspiegel relativ zum Absorberrohr erfolgt.

Die notwendig gegenläufige Bewegung der Primärspiegel rechts des Absorberrohrs im Vergleich zu den Primärspiegeln links des Absorberrohrs wird durch eine nur einer der beiden Seiten zugeordnete Umlenkung der Linearbewegung der Schubstange realisiert.

In vorteilhafter Ausgestaltung können die Linearmotoren mit einer gemeinsamen Steuerung und/oder Regelung verbunden sein, da die von den Schubstangen auszuführenden Relativbewegungen über die gesamte Länge des Absorberrohrs exakt identisch sind und somit eine gemeinsame Regelung für die gesamte Anlage möglich ist.

Die Erfindung wird nachstehend anhand eines in der Zeichnung nur schematisch dargestellten Ausführungsbeispiels näher erläutert.

Es zeigen:
- Fig. 1:: eine Fresnel-Solar-Kollektor-Anordnung im Querschnitt,
- Fig. 2:: ein Detail der Fresnel-Solar-Kollektor-Anordnung in einer Prinzipskizze und
- Fig. 3:: ein Regelungsbild zu der in den Fig. 1 und 2 gezeigten Fresnel-Solar-Kollektor-Anordnungen.

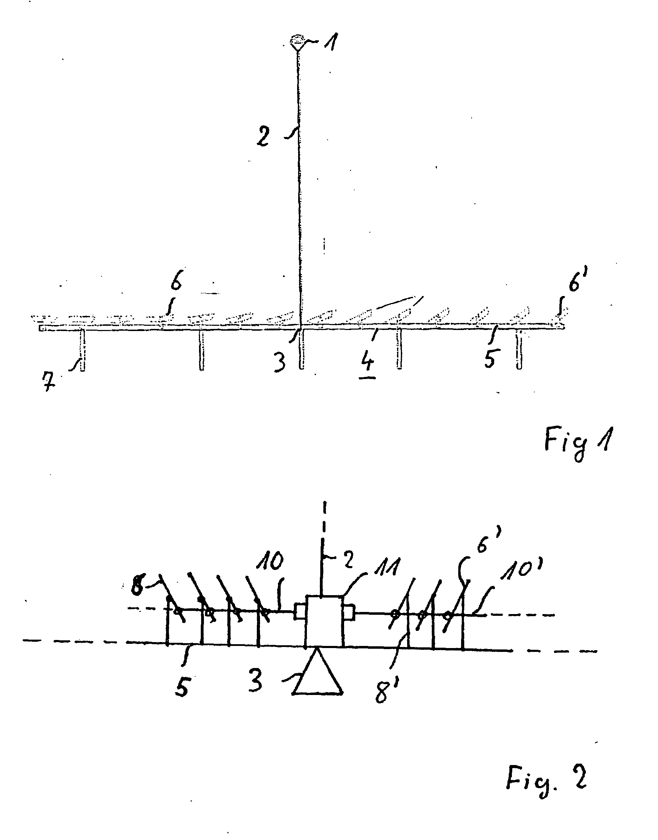

Gemäß der Darstellung in Figur 1 besteht die Fresnel-Solar-Kollektor-Anordnung aus einem Receiver 1, der auf einem Receivermast 2 aufgeständert ist. Der Receivermast 2 ist hierzu in einem Fixlager 3 gelagert, das gleichzeitig die Zentralachse eines winkelsymmetrisch angeordneten Spiegeltragwerks 4 darstellt. Dabei besteht das Spiegeltragwerk 4 im Wesentlichen aus Trägerschienen 5, die aus dem selben Material wie der Receivermast 2, nämlich im vorliegenden Ausführungsbeispiel aus Stahl 37, gefertigt sind und sich jeweils orthogonal von der Längsachse des Receivers 1 forterstrecken. Dabei besteht der Receiver 1 im Wesentlichen aus einem Absorberrohr, in dem ein als Wärmespeicher wirkendes Wärmemedium strömt. Dabei kann es sich um einfachen Wasserdampf oder ein Thermoöl handeln. Das Absorberrohr wird in der Regel von einem Sekundärreflektor übergriffen, der etwaige Streustrahlung der Spiegelanordnung einfängt und auf das Absorberrohr umlenkt. Auf der Trägerstruktur sind beidseits, also im Wesentlichen spiegelsymmetrisch zu dem erhöht aufgestellten Receiver 1 angeordnete Spiegelbahnen, die Primärspiegel 6, 6' verschwenkbar gelagert. Die Spiegelbahnen sind dabei auf dem Spiegeltragwerk 4 im Wesentlichen so gelagert, dass die auf die Fresnel-Solar-Kollektor-Anordnung einwirkende Sonnenstrahlung reflektiert und derart umgelenkt wird, dass sie im Bereich des Receivers 1, auf das Absorberrohr fokussiert ist. Das Absorberrohr bildet dabei idealerweise die Fokallinie der auf dem Spiegeltragwerk 4 aufgelagerten Primärspiegel 6, 6'. Dabei sind einem jeden Receiver 1 mehrere Primärspiegel 6, 6' mit unterschiedlicher Beabstandung, also in zunehmenden orthogonalen Abstand von der durch das Absorberrohr definierten Zentralachse des Spiegeltragwerks 4.

Das Spiegeltragwerk 4 selbst ist wiederum gegenüber dem Aufstellboden mit Fußelementen 7 aufgeständert, wobei diese mit den sich orthogonal zur Längserstreckung des Receivers 1 fest erstreckenden Trägerschienen 5 nur durch Gleitlager verbunden sind. Konkret sind also der Receivermast 2, wie auch die Trägerschienen 5, die in Längserstreckung des Receivers 1 hintereinander angeordnet sind, nur in dem ortsfesten Fixlager 3 fixiert und ansonsten zwängungsfrei gleitgelagert. Nachdem sowohl der Receivermast 2, wie auch die Trägerschienen 5 aus Stahl 37 gefertigt sind und somit einen im Wesentlichen identischen Ausdehnungskoeffizienten besitzen, entspricht auch eine etwaige thermische Ausdehnung der beiden Tragwerke im Wesentlichen einander. Die Längenausdehnung des Receivermastes 2 wird also im Wesentlichen dadurch kompensiert, dass durch eine gleichartige Ausdehnung der Trägerschiene 5 ein etwaiger Winkelfehler der Anordnung mit der möglichen Folge, dass das Absorberrohr aus der Fokallinie der Spiegelanordnung rückt, kompensiert wird.

Die Fresnel-Solar-Kollektor-Anordnung gemäß Figur 1 ist somit im Wesentlichen selbstregelnd temperaturkompensiert, indem etwaige Materialdehnungen und -schwindungen aufgrund der im Bereich der Einsatzgebiete von Fresnel-Solar-Kollektor-Anordnungen durchaus üblichen extremen Temperaturschwankungen sich wechselseitig ausgleichen. Hierdurch werden die Streuverluste der reflektierten Strahlung, die sich sehr negativ auf den Ertragsfaktor der Anlage auswirken, zumindest weitgehend vermieden. Aufwändige Techniken zur Kompensation der temperaturbedingten Längenänderung der eingesetzten Materialien können daher weitgehend entfallen.

Gemäß Figur 2 ist die Anordnung mit Vorteil derart ergänzt, dass die den einzelnen Trägerschienen 5 zugeordneten Primärspiegel 6, 6' jeweils mittels eines Spiegelträgers 8, 8' verschwenkbar mit der jeweiligen Trägerschiene 5 verbunden sind. Dabei ist es aus dem Stand der Technik bekannt, einem jeden Primärspiegel 6, 6' einen separaten Elektromotor zuzuordnen und mit Hilfe dieses elektromotorischen Antriebs eine Nachführung der Primärspiegel 6, 6' je nach Stand der Sonne relativ zum Receiver 1 zu erreichen. Gemäß Figur 2 sind mehrere Primärspiegel 6, 6' zu einer Primärspiegelgruppe zusammengefasst, die sich dadurch auszeichnet, durch ein gemeinsames Stellglied, nämlich eine Schubstange 10, 10' miteinander mechanisch gekoppelt zu sein. Die Schubstange 10, 10' ist mit einem Linearantriebs 11 linear verschieblich elektromotorisch angetrieben, wobei die Bewegung der Schubstangen 10, 10' links und rechts des Receivermastes 2 und damit des Receivers 1 mittels einer hier nicht weiter dargestellten Umlenkung gegenläufig sind. Die Schubstangen 10 bzw. 10' links und rechts des Receivers 1 werden also entweder beide eingerückt oder beide ausgerückt. Hierunter ist zu verstehen, dass eine der beiden Schubstangen 10 oder 10' nur indirekt an den Primärspiegeln 6, 6', nämlich über eine Umlenkung angreift, wie zu der erwähnte gegenläufigen Bewegung führt. Dies wiederum bewirkt, dass die rechts und links angeordneten Spiegel im exakt gleichen Winkelverhältnis dem zentral angeordneten Reflektor bzw. Absorberrohr zu- oder abgewandt werden. Die gemäß Figur 2 gezeigte Lösung ermöglicht es also mittels eines einzigen Elektromotors, vorstehend mittels eines Linearantriebs, eine mechanische Kopplung über eine einfache Schubstange 10, 10' zu schaffen und somit eine komplizierte Abstimmung mehrerer einzelner Elektromotoren untereinander zumindest entlang einer Trägerschiene 5, also innerhalb einer Primärspiegelgruppe, einzusparen und statt dessen durch die mechanische starre Ankopplung und aufgrund der Winkeltreue der Anordnung eine exakte Nachführung nach dem Stand der Sonne mit einem einzigen gemeinsamen Linearantrieb zu ermöglichen.

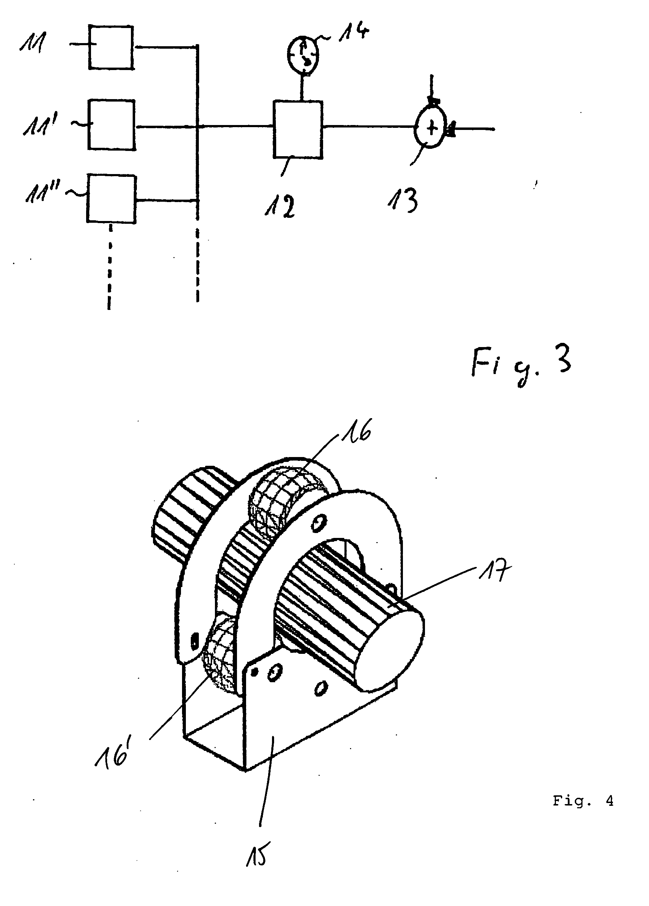

Dabei kann es sich gemäß der Prinzipdarstellung in Figur 3 um eine Steuerung und/oder Regelung handeln. Gemäß der Darstellung in Figur 3 ist den Linearmotoren 11,11', 11'', denen jeweils eine oder mehrere Schubstangen 10, 10' bzw. Trägerschienen 5 zugeordnet sind, ein gemeinsamer Regler 12 zugeordnet. Dieser Regler 12 kann im einfachsten Fall im Sinne einer Steuerung zeitgesteuert gemäß einem vordefinierten Programms, das jeder Zeit den bestimmten Sonnenstand und damit eine bestimmte Winkelstellung der Primärspiegel 6 zuordnet, gesteuert werden. Hierzu ist der Regler 12 mit einer Zeiterfassungsvorrichtung 14 datenverbunden. Alternativ kann jedoch der Regler 12 auch mit einem echten Ist-/Sollwert-Vergleich 13 verschaltet sein, wobei der Ist- und Sollwert entweder den realen Sonnenstand mit der Sollwertvorgabe vergleicht oder aber direkt der Wirkungsgrad der Anlage, beispielsweise durch Auswertung der erreichten Strahlungsintensität oder die aktuelle Stromausbeute als Istwert zur Regelgröße zurückgeführt ist, um eine etwaige Regelabweichung zu ermitteln. Über das Stellglied kann dann die Winkelstellung der Primärspiegel 6, 6' nachjustiert werden. Die Schubstange 10, 10' stellt also mehr oder minder das Stellglied bei richtigem Verständnis auch für die Regelung bzw. Nachführung der Primärspiegelanordnung da, wobei zu diesem Stellglied noch der Elektromotor 11, 11', 11'' gehörig ist. Die Ansteuerung bzw. Regelung der Linearmotoren 11, 11', 11'' wird über einen gemeinsamen Regler 12 realisiert.

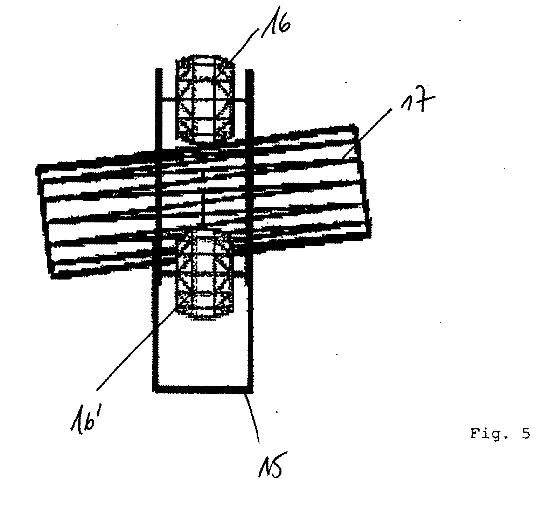

Die Figuren 4 und 5 zeigen einen Rollenbock 15, in dem eine Nachführwelle 17 geführt ist. Die Nachführwelle 17 verbindet die Primärspiegel 6, 6' einer Primärspiegelgruppe und gewährleistet eine parallele Drehung aller Spiegel dieser Gruppe infolge einer durch die Bewegung einer Schubstange 10, 10' initiierten Nachführung. Der Rollenbock 15 umgreift die Nachführwelle 17, wobei die Welle in dem Rollenbock 15 auf Rollelementen 16, 16', 16" gelagert ist. Diese Rollelemente 16, 16', 16'' sind im Wesentlichen zylindrisch, weisen jedoch konkave Mantelflächen auf, auf welchen sich die Nachführwelle 17 abstützt. Durch die fassförmige Formgebung ist es ermöglicht, wie in Figur 5 gezeigt, die Nachführwelle 17 schräg anzustellen, wobei der Rollenbock 15 in seiner senkrechten Position verbleibt. Dies ermöglicht eine Verlegung der Nachführwelle 17 entlang schrägen Flächen, etwa an Hügeln oder auf unebenem Terrain. Dabei muss selbstverständlich gewährleistet sein, dass eine Verdeckung des Receivers 1 gegenüber den betroffenen Primärspiegeln 6, 6' vermieden ist.

Vorstehend ist somit eine Fresnel-Solar-Kollektor-Anordnung beschrieben, die weitgehend dadurch temperaturkompensiert ist, dass für die Trägerschienen 5 des Spiegeltragwerks 4 und die Receivermasten 2 Materialien mit den gleichen Temperaturausdehnungskoeffizienten verwendet werden und überdies der Receivermast 2, als auch das Spiegeltragwerk 4 zwängungsfrei gelagert ist. Darüber hinaus ist die Nachführung der Primärspiegel 6, 6' nach dem Sonnenstand durch eine mechanische Kopplung der Primärspiegel 6, 6' wesentlich vereinfacht.

### BEZUGSZEICHENLISTE

- 1: Receiver
- 2: Receivermast
- 3: Fixlager
- 4: Spiegeltragwerk
- 5: Trägerschiene
- 6, 6': Primärspiegel
- 7: Fußelemente
- 10, 10': Schubstange
- 11: Linearmotor
- 12: Regler
- 13: Ist-/Sollwert-Vergleich
- 14: Zeiterfassungsvorrichtung
- 15: Rollenbock
- 16, 16', 16": Rollelemente
- 17: Nachführwelle

## Patentansprüche

1. Fresnel-Solar-Kollektor-Anordnung mit wenigstens einem Receiver (1), der auf einem Receivertragwerk erhöht gegenüber mehreren Primärspiegeln (6, 6') gelagert ist, die beidseits des Receivers (1) auf einem Spiegeltragwerk (4) verschwenkbar derart angeordnet sind, dass die von den Primärspiegeln (6) reflektierte Sonnenstrahlung zumindest im Wesentlichen auf den Receiver (1) fokussiert ist und die Primärspiegel (6) jeweils der Sonne nachgeführt sind, wobei das sich von dem Receivertragwerk beidseits forterstreckende Spiegeltragwerk (4) im Bereich des Receivertragwerks und/oder in Verbindung mit dem Receivertragwerk ortsfest gelagert ist, **dadurch gekennzeichnet, dass** das Spiegeltragwerk (4) im Übrigen gleitend, mithin zumindest weitgehend zwängungsfrei, gelagert ist.

2. Fresnel-Solar-Kollektor-Anordnung nach Anspruch 1, **dadurch gekennzeichnet, dass** das Receivertragwerk und das Spiegeltragwerk (4) aus einem Material mit zumindest weitgehend identischen Materialausdehnungskoeffizienten, vorzugsweise jeweils aus Stahl 37, hergestellt ist.

3. Fresnel-Solar-Kollektor-Anordnung nach Anspruch 1 oder 2, **dadurch gekennzeichnet, dass** der Receiver (1) ein Absorberrohr umfasst, das mittels einer, vorzugsweise in einer gedachten Gerade, angeordneten Reihe von Receivermasten (2), die im Wesentlichen das Receivertragwerk ausbilden, erhöht gelagert ist und das Spiegeltragwerk (4) voneinander beabstandete Trägerschienen (5) umfasst, die gegebenenfalls mittels entsprechender Verstrebungen fachwerkartig verbunden sind, wobei sich diese Trägerschienen (5) zumindest im Wesentlichen orthogonal von einer gedachten Geraden der in Reihe angeordneten Receivermasten (2) forterstreckt und diese Trägerschienen (5) in Verbindung mit den Receivermasten (2) oder im Fundamentbereich der Receivermasten (2) ortsfest fixiert und ansonsten gleitend gelagert sind.

4. Fresnel-Solar-Kollektor-Anordnung nach Anspruch 3, **dadurch gekennzeichnet, dass** die Primärspiegel (6, 6'), die in einer gedachten Linie parallel oder senkrecht zur Längserstreckung des Absorberrohrs des Receivers (1) auf einer gemeinsamen Trägerschiene (5) angeordnet sind, zu einer Primärspiegelgruppe zusammengefasst sind, wobei die Primärspiegel (6, 6') der Primärspiegelgruppe mittels eines gemeinsamen Stellglieds mechanisch gekoppelt und hierdurch gemeinsam der Sonne nachgeführt sind.

5. Fresnel-Solar-Kollektor-Anordnung nach Anspruch 4, **dadurch gekennzeichnet, dass** die einer oder mehreren in gedachter Verlängerung zueinander angeordneten Trägerschienen (5) zugeordneten Primärspiegel (6) zu einer Primärspiegelgruppe zusammengefasst sind.

6. Fresnel-Solar-Kollektor-Anordnung nach Anspruch 5, **dadurch gekennzeichnet, dass** die Primärspiegel (6, 6') der Primärspiegelgruppe jeweils auf der oder den Trägerschienen (5) verschwenkbar gelagert sind, wobei diese Primärspiegel (6) mittels einer, vorzugsweise elektromotorisch angetriebenen, Schubstange (10, 10') starr miteinander verbunden sind und mittels einer Linearbewegung der Schubstange (10, 10') in Richtung der Längserstreckung der Schubstange (10, 10') in ihrem jeweiligen Anstellwinkel relativ zu dem Absorberrohr des Receivers (1) gemeinsam verschwenkbar sind.

7. Fresnel-Solar-Kollektor-Anordnung nach Anspruch 6, **dadurch gekennzeichnet, dass** die Primärspiegel (6, 6') einer Primärspiegelgruppe zur gemeinsamen Verschwenkung mittels einer Nachführwelle (17) untereinander fest verbunden sind, welche im Wesentlichen parallel zur Längserstreckung des Absorberrohrs gegenüber den Trägerschienen (5) drehbar angeordnet ist.

8. Fresnel-Solar-Kollektor-Anordnung nach Anspruch 7, **dadurch gekennzeichnet, dass** die Nachführwelle (17) in einem Rollenbock (15) gelagert ist, welcher die Welle umgreift, wobei die Welle in dem Rollenbock (15) mittels einer Mehrzahl, vorzugsweise drei, fassförmigen Rollelementen (16, 16', 16") derart gehalten ist, dass eine axiale Drehung der Nachführwelle (17) ermöglicht ist.

9. Fresnel-Solar-Kollektor-Anordnung nach einem der Ansprüche 6 bis 8, **dadurch gekennzeichnet, dass** die Schubstange (10, 10') mittels eines Linearmotors (11) in Richtung ihrer Längserstreckung motorisch verschiebbar ist.

10. Fresnel-Solar-Kollektor-Anordnung nach Anspruch 9, **dadurch gekennzeichnet, dass** der Linearmotor (11) vorzugsweise im Bereich des Receivermastes (2) angeordnet ist und eine oder mehrere Schubstangen (10, 10') von dem Linearmotor (11) angetrieben werden, wobei die rechts des Receivers (1) angeordneten Primärspiegel (6) zum Zwecke der Nachführung gegenläufig zu den Primärspiegeln (6') links des Receivers (1) bewegt werden, wobei die gegenläufige Bewegung durch eine entsprechende Umlenkung, die auf nur einer Seite des Receivers (1) vorgesehen ist, umgesetzt ist.

11. Fresnel-Solar-Kollektor-Anordnung nach Anspruch 3, **dadurch gekennzeichnet, dass** innerhalb des Absorberrohrs ein Wärmespeichermedium, vorzugsweise Wasserdampf oder Thermoöl, strömt.

12. Fresnel-Solar-Kollektor-Anordnung nach Anspruch **10** oder **11, dadurch gekennzeichnet, dass** der Receiver (1) zusätzlich ein dem Absorberrohr zugeordneten Sekundärreflektor umfasst, der im Wesentlichen die von den Primärspiegeln (6, 6') reflektierte Streustrahlung aufnimmt und auf das Absorberrohr umlenkt.

13. Fresnel-Solar-Kollektor-Anordnung nach einem der vorhergehenden Ansprüche, **dadurch gekennzeichnet, dass** die Abmessungen und Beabstandungen der Primärspiegel (6, 6') derart bemessen sind, dass eine wechselseitige Verschattung der Primärspiegel (6, 6') zumindest weitgehend ausgeschlossen ist.

## Claims

1. Fresnel solar collector arrangement having at least one receiver (1) mounted on a receiver supporting framework, elevated relative to several primary mirrors (6, 6') which are disposed pivotably on a mirror supporting framework (4) on both sides of the receiver (1), in such a manner that the solar radiation reflected by the primary mirrors (6) is focussed at least essentially onto the receiver (1), and the primary mirrors (6) are, in each instance, used to track the sun, whereby the mirror supporting framework (4) extending outward from the receiver supporting framework on both sides is mounted in a fixed location in the region of the receiver supporting framework and/or in connection with the receiver supporting framework, **characterised in that** the mirror supporting framework (4) is furthermore mounted in sliding manner, i.e. at least extensively free from constraint.

2. Fresnel solar collector arrangement according to claim 1, **characterised in that** the receiver supporting framework and the mirror supporting framework (4) are made from a material having at least largely identical material expansion coefficients, preferably from steel 37, in each instance.

3. Fresnel solar collector arrangement according to claim 1 or 2, **characterised in that** the receiver (1) comprises an absorber tube that is mounted in an elevated manner by means of a row of receiver masts (2), preferably disposed in an imaginary straight line, which essentially form the receiver supporting framework, and that the mirror supporting framework (4) comprises supporting rails (5) that are spaced apart from one another and connected in a framework-like manner by means of appropriate struts, if necessary, whereby these supporting rails (5) extend outward at least essentially orthogonally from an imaginary straight line of the receiver masts (2) disposed in a row, and that these supporting rails (5) are fixed in place in connection with the receiver masts (2), or in the foundation region of the receiver masts (2), and otherwise are mounted to slide.

4. Fresnel solar collector arrangement according to claim 3, **characterised in that** the primary mirrors (6, 6') disposed on a common supporting rail (5) along an imaginary line parallel or perpendicular to the longitudinal expanse of the absorber tube of the receiver (1), are combined to form a primary mirror group, whereby the primary mirrors (6, 6') of the primary mirror group are mechanically coupled by means of a common setting element and, as a result, are used to track the sun together.

5. Fresnel solar collector arrangement according to claim 4, **characterised in that** the primary mirrors (6) assigned to one or more supporting rails (5) disposed in an imaginary extension relative to one another are combined to form a primary mirror group.

6. Fresnel solar collector arrangement according to claim 5, **characterised in that** the primary mirrors (6, 6') of the primary mirror group are, in each instance, mounted so as to pivot on the supporting rail(s) (5), whereby these primary mirrors (6) are rigidly connected with one another by means of a connecting rod (10, 10'), preferably driven by an electric motor, and can be pivoted together, relative to the absorber tube of the receiver (1), by means of linear movement of the connecting rod (10, 10') in the direction of the longitudinal expanse of the connecting rod (10, 10'), in terms of their respective angle of incidence.

7. Fresnel solar collector arrangement according to claim 6, **characterised in that** the primary mirrors (6, 6') of a primary mirror group are firmly connected with one another by means of a tracking shaft (17), for the purpose of common pivoting, which shaft is essentially disposed parallel to the longitudinal expanse of the absorber tube, to rotate relative to the supporting rails (5).

8. Fresnel solar collector arrangement according to claim 7, **characterised in that** the tracking shaft (17) is mounted in a roller block (15) that surrounds the shaft, whereby the shaft is held in the roller block (15) by means of a multiplicity, preferably three, of barrel-shaped roller elements (16, 16', 16"), in such a manner that axial rotation of the tracking shaft (17) is made possible.

9. Fresnel solar collector arrangement according to one of the claims 6 through 8, **characterised in that** the connecting rod (10, 10') can be displaced by a motor in the direction of its longitudinal expanse, by means of a linear motor (11).

10. Fresnel solar collector arrangement according to claim 9, **characterised in that** the linear motor (11) is preferably disposed in the region of the receiver mast (2), and one or more connecting rods (10, 10') are driven by the linear motor (11), whereby the primary mirrors (6) disposed on the right of the receiver (1) are moved opposite the primary mirrors (6') on the left of the receiver (1), for the purpose of tracking, whereby this opposite movement is implemented by means of a corresponding deflection mechanism provided on only one side of the receiver (1).

11. Fresnel solar collector arrangement according to claim 3, **characterised in that** a heat storage medium, preferably steam or thermal oil, flows inside the absorber tube.

12. Fresnel solar collector arrangement according to claim 10 or 11, **characterised in that** the receiver (1) additionally comprises a secondary reflector assigned to the absorber tube, which essentially absorbs the scattered radiation reflected by the primary mirrors (6, 6'), and deflects it onto the absorber tube.

13. Fresnel solar collector arrangement according to one of the preceding claims, **characterised in that** the dimensions and spacings of the primary mirrors (6, 6') are dimensioned in such a way that mutual shadowing of the primary mirrors (6, 6') is precluded, at least to a great extent.

## Revendications

1. Système de capteurs solaires Fresnel comprenant au moins un récepteur (1), arrangé sur une structure porteuse de récepteur en surélévation par rapport à plusieurs miroirs primaires (6, 6'), disposés des deux côtés du récepteur (1) de façon pivotante sur une structure porteuse de miroirs (4) de sorte que le rayonnement du soleil réfléchi par les miroirs primaires (6) est focalisé du moins essentiellement sur le récepteur (1) et que les miroirs primaires (6) suivent respectivement le mouvement du soleil, la structure porteuse des miroirs (4) qui s'étend de la structure porteuse du récepteur des deux côtés étant arrangée de façon fixe dans la région de la structure porteuse du récepteur et/ou en liaison avec la structure porteuse du récepteur,
**caractérisé en ce que** la structure porteuse des miroirs (4) est arrangée de façon glissante au demeurant, donc du moins essentiellement sans contrainte.

2. Système de capteurs solaires Fresnel selon la revendication 1, **caractérisé en ce que** la structure porteuse du récepteur et la structure porteuse des miroirs (4) sont faits d'un matériau présentant du moins en grande partie des coefficients de dilatation de matériau identiques, de préférence de l'acier 37.

3. Système de capteurs solaires Fresnel selon la revendication 1 ou 2, **caractérisé en ce que** le récepteur (1) comprend un tube absorbeur qui est logé en surélévation au moyen d'une série de mâts de récepteur (2), ces mâts étant disposés de préférence sur une ligne droite imaginaire et constituant essentiellement la structure porteuse du récepteur, et que la structure porteuse des miroirs (4) comprend des profilés supports (5) disposés à une certaine distance les uns des autres et reliés au besoin en treillis au moyen de tiges de renfort adaptées, ces profilés supports (5) s'étendant du moins essentiellement de façon orthogonale de la ligne droite imaginaire formée par la rangée de mâts de récepteur (2) et ces profilés supports (5) étant fixés de façon fixe en liaison avec les mâts de récepteur (2) ou au niveau des fondations des mâts de récepteur (2) et logés de façon mobile pour le reste.

4. Système de capteurs solaires Fresnel selon la revendication 3, **caractérisé en ce que** les miroirs primaires (6, 6'), qui sont disposés sur une ligne imaginaire parallèle ou perpendiculaire à la projection longitudinale du récepteur (1) sur un profilé support commun (5), sont regroupés en un groupe de miroirs primaires, les miroirs primaires (6, 6') du groupe de miroirs primaires étant couplés mécaniquement au moyen d'un actuateur commun et réglés en commun par ce dernier de manière à suivre le mouvement du soleil.

5. Système de capteurs solaires Fresnel selon la revendication 4, **caractérisé en ce que** les miroirs primaires (6) affectés à un ou à plusieurs profilés supports (5) disposés dans le prolongement imaginaire l'un de l'autre sont regroupés en un groupe de miroirs primaires.

6. Système de capteurs solaires Fresnel selon la revendication 5, **caractérisé en ce que** les miroirs primaires (6, 6') du groupe de miroirs primaires sont chacun logés de façon pivotante sur le ou les profilés supports (5), ces miroirs primaires (6) étant reliés de façon fixe les uns aux autres au moyen d'une barre de poussée (10, 10'), de préférence entraînée par un moteur électrique, leur angle d'inclinaison respectif pouvant pivoter en commun par rapport au tube absorbeur du récepteur (1) au moyen d'un mouvement linéaire de la barre de poussée (10, 10') dans le sens de la projection longitudinale de la barre de poussée (10, 10').

7. Système de capteurs solaires Fresnel selon la revendication 6, **caractérisé en ce que** les miroirs primaires (6, 6') d'un groupe de miroirs primaires sont reliés, pour le pivotement commun, de façon fixe les uns aux autres au moyen d'un arbre de suivi du soleil (17), qui est disposé essentiellement parallèlement à la projection longitudinale du tube absorbeur de façon à pouvoir pivoter par rapport aux profilés supports (5).

8. Système de capteurs solaires Fresnel selon la revendication 7, **caractérisé en ce que** l'arbre de suivi du soleil (17) est logé dans un support à rouleaux (15) qui entoure l'arbre, l'arbre étant maintenu dans le support à rouleaux (15) au moyen d'un certain nombre, de préférence trois, d'éléments roulants en forme de tonneau (16, 16', 16") de manière à ce qu'une rotation axiale de l'arbre de suivi du soleil (17) soit possible.

9. Système de capteurs solaires Fresnel selon l'une quelconque des revendications 6 à 8, **caractérisé en ce que** la barre de poussée (10, 10') peut être déplacée au moyen d'un moteur linéaire (11) dans le sens de sa projection longitudinale.

10. Système de capteurs solaires Fresnel selon la revendication 9, **caractérisé en ce que** le moteur linéaire (11) est disposé de préférence dans la zone du mât de récepteur (2) et qu'une ou plusieurs barres de poussée (10, 10') sont entraînées par le moteur linéaire (11), les miroirs primaires (6) disposés du côté droit du récepteur (1) se déplaçant, pour le suivi du mouvement du soleil, dans le sens opposé aux miroirs primaires (6') du côté gauche du récepteur (1), ce mouvement en sens opposé étant réalisé par un dispositif de renvoi approprié prévu sur un seul côté du récepteur (1).

11. Système de capteurs solaires Fresnel selon la revendication 3, **caractérisé en ce qu'**un fluide accumulateur thermique, de préférence de la vapeur d'eau ou une huile thermique, circule dans le tube absorbeur.

12. Système de capteurs solaires Fresnel selon la revendication 10 ou 11, **caractérisé en ce que** le récepteur (1) comprend en plus un réflecteur secondaire affecté au tube absorbeur, qui capte essentiellement le rayonnement diffus réfléchi par les miroirs primaires (6, 6') et le redirige vers le tube absorbeur.

13. Système de capteurs solaires Fresnel selon l'une quelconque des dispositions ci-dessus, **caractérisé en ce que** les dimensions et écartements des miroirs primaires (6, 6') sont calculés de manière à exclure du moins en grande partie un ombrage réciproque des miroirs primaires (6, 6').
